(19) Europäisches Patentamt
European Patent Office
Office européen des brevets

(11) Numéro de publication: **0 211 780 A1**

(12) **DEMANDE DE BREVET EUROPEEN**

(21) Numéro de dépôt: 86420192.6

(22) Date de dépôt: 17.07.86

(51) Int.Cl.⁴: A 01 N 43/653

(30) Priorité: 18.07.85 FR 8511202

(43) Date de publication de la demande: 25.02.87 Bulletin 87/9

(84) Etats contractants désignés: AT BE CH DE FR GB IT LI LU NL SE

(71) Demandeur: RHONE-POULENC AGROCHIMIE
14-20, rue Pierre Baizet
F-69009 Lyon(FR)

(72) Inventeur: Delahousse, Bernard
11 Allée de l'Etang
Lissieu F-69380 - Lozanne(FR)

(74) Mandataire: Brachotte, Charles et al,
RHONE-POULENC AGROCHIMIE 14-20, Rue Pierre Baizet
B.P. 9163
F-69263 Lyon Cedex 09(FR)

(54) **Procédé de régulation de croissance des plantes de colza.**

(57) Régulation de la croissance des plantes de colza, notamment par augmentation des ramifications qui consiste à appliquer au colza en cours de croissance un produit de formule

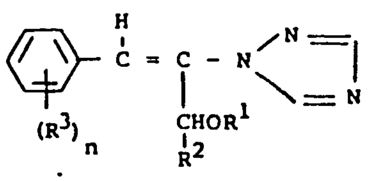

(I)

dans laquelle:

$R^1$ est un atome d'hydrogène ou un radical alkyle, alkényle ou alkynyle inférieur (c'est à dire ayant au plus 4 atomes de carbone),

$R^2$ est un radical alkyle de 1 à 6 atomes de carbone, un radical cyclopropyle ou méthyl-1 cyclopropyle,

$R^3$ est un atome d'halogène ou un groupe alkyle inférieur, alkoxy inférieur, phénoxy, phényle, cyano ou nitro,

n est un nombre entier de 0 à 3.

EP 0 211 780 A1

La présente invention concerne le domaine de la régulation de la croissance des plantes et plus précisément un procédé de traitement du colza par un composé à groupe triazole.

Dans le présent exposé on utilise l'expression "régulation de la croissance des plantes" au sens le plus large qui couvre toute modification de la physiologie des plantes. Les produits connus sous le nom de régulateurs de croissance s'appellent également substances de croissance.

On connait les produits de formule

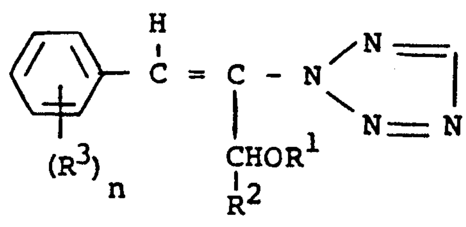

(I)

ainsi que leurs diverses formes (racémique, isomères géométriques) et les compositions phytosanitaires les contenant, notamment par le brevet belge 882335 et autres brevets de la même famille. Dans cette formule les divers symboles ont les significations suivantes :

$R^1$ est un atome d'hydrogène ou un radical alkyle, alkényle ou alkynyle inférieurs (c'est à dire ayant au plus 4 atomes de carbone),

$R^2$ est un radical alkyle de 1 à 6 atomes de carbone, un radical cyclopropyle ou méthyl-1 cyclopropyle,

$R^3$ est un atome d'halogène ou un groupe alkyle inférieur, alkoxy inférieur, phénoxy, phényle, cyano ou nitro,

n est un nombre entier de 0 à 3.

De préférence l'invention concerne les composés dans lesquels $R^1$ est H, $R^2$ est tertiobutyle, $R^3$ est Cl, n est égal à 1 (position para) ou 2 (positions ortho ou para). On préfère que n soit égal à 1.

Dans ces composés l'un des isomères géométriques est actif du point de vu fongicide et pour certaines régulations de croissance, et l'autre isomère est pratiquement inactif ; l'isomère actif est dit isomère D ; il est décrit en particulier dans le brevet belge 882335 dont le contenu est incorporé, par référence, à la présente description.

L'activité régulatrice de croissance connue de ces composés concerne plus spécialement la diminution de la hauteur des gazons et le racourcissement des tiges de blé, de riz, d'orge, de chrysanthème. Ces composés ont aussi été présentés comme herbicides sélectifs du riz, du soja, du cotonnier, du maïs, de l'arachide, du tournesol, de la betterave et des cultures légumières.

Il a maintenant été trouvé, et c'est ce qui fait l'objet de la présente invention, que l'on pouvait aussi obtenir un effet de régulation de croissance du colza grâce à l'application d'une quantité efficace de produits de formule (I). L'invention permet également d'augmenter le nombre de siliques par plant de colza. Plus précisément, il a été trouvé que l'on pouvait raccourcir les tiges des plantes de colza (de préférence, de colza d'hiver) et augmenter leur ramification grâce à l'application des produits de formule (I). La régulation de croissance du colza selon l'invention n'était pas prévisible au vu de l'art antérieur.

L'augmentation de la ramification (connue aussi sous le nom de branching) des tiges des plantes de colza présente l'intérêt de pouvoir donner naissance à un plus grand nombre de fleurs et de fruits, et est donc une voie vers l'accroissement des récoltes.

Selon une modalité préférée les produits de formule (I) sont appliqués aux cultures de colza à raison de 10 à 120 g/ha, de préférence de 25 à 70 g/ha. Ces doses sont données pour l'isomère actif, elles sont à doubler quand on met en oeuvre un racémique. Bien que des doses de 100 g/ha

donnent des résultats intéressants, les doses plus basses sont préférées en ce qu'elles permettent un meilleur ensemble de résultats favorables.

Le stade d'application est avantageusement la période de développement des plantes de colza allant des stades $C_1$ à $D_2$ selon la définition illustrée à la figure 1, c'est à dire du stade allant depuis la reprise de végétation après l'hiver jusqu'au dégagement de l'inflorescence principale.

Pour leur emploi pratique les composés de formule (I) sont généralement utilisés dans des compositions qui comprennent en général en plus de la matière active, un support inerte et/ou un agent tensio-actif compatible avec la matière active et utilisable en agriculture.

De telles compositions ont été déja décrites dans le brevet belge 882335.

Parmi les compositions les plus courantes, on peut citer les concentrés émulsionnables, les poudres mouillables et les dispersions aqueuses. En pratique, les traitements selon l'invention peuvent être effectués en appliquant sur la culture du colza environ 200 à 1000 l/ha de bouillie, c'est à dire de solution ou dispersion de la matière active diluées à l'aide d'eau; cette bouillie contient 0,01 à 10 g/l, de préférence de 0,1 à 0,3 g/l de matière active.

Les exemples suivants donnés à titre non limitatif illustrent l'invention et montrent comment elle peut être mise en oeuvre.

Exemple 1

On a traité des parcelles de colza d'hiver de 50 $m^2$ contenant environ 50 plantes par $m^2$ à l'aide de 500 l/ha de bouillie contenant des doses diverses d'isomère D de formule (I) dans laquelle $R^1$ était H, $R^2$ était tertiobutyle, $R^3$ était Cl, n était 1 (position para); la bouillie utilisée a été obtenue par dilution à l'eau de poudre mouillable contenant 10% en poids de matière active

ainsi que les additifs habituels des poudres mouillables tels que le support solide et les tensioactifs .

La culture de colza en était au stade $D_1$ (début d'élongation de la tige). On a observé les résultats de régulation de croissance; les résultats indiqués ci-après sont la moyenne de 4 essais semblables.

Le raccourcissement des tiges a été exprimé sous la forme:

$$100 \times [ 1- \frac{\text{hauteur des tiges raccourcies}}{\text{hauteur des tiges témoins}} ]$$

les hauteurs de tiges étant déterminées quand les plantes de colza ont fini de croître (il en est de même pour le nombre de ramifications).

| Dose de matière active en g/ha | raccourcissement des tiges exprimé en pourcentage | nombre de ramifications par plante |
|---|---|---|
| 50 | 46,1 | 10,25 |
| 75 | 57,6 | 11 |
| 100 | 69,5 | 13 |
| (témoin) 0 | 0<br>(hauteur 67,25cm) | 7,5 |

Exemple 2

On a reproduit l'exemple 1 dans une autre région de France avec du colza au stade $C_1$ (reprise de la végétation au printemps) et en utilisant 400 l/ha de bouillie. Les résultats suivants ont été obtenus :

| Dose de matière active en g/ha | raccourcissement des tiges exprimé en pourcentage | nombre de ramifications par plante |
|---|---|---|
| 50 | 39,6 | 8,3 |
| 75 | 64,1 | 8,65 |
| 100 | 41,5 | 8,0 |
| (témoin) 0 | 0 (hauteur 132,5cm) | 6,8 |

Exemple 3

On reproduit l'exemple 1 mais avec du colza au stade de $D_2$ (boutons accolés visibles). Les résultats suivants ont été obtenus

| Dose de matière active en g/ha | raccourcissement des tiges exprimé en pourcentage | nombre de ramifications par plante |
|---|---|---|
| 50 | 16,7 | 11,75 |
| 75 | 26,0 | 12,75 |
| 100 | 17,8 | 11,25 |
| (témoin) 0 | 0 (hauteur 67,25cm) | 7,5 |

Exemple 4

On reproduit l'exemple 2 avec de colza au stade $D_2$ (boutons accolés visibles). Les résultats suivants ont été obtenus :

| Dose de matière active en g/ha | raccourcissement des tiges exprimé en pourcentage | nombre de ramifications par plante |
|---|---|---|
| 50 | 13,2 | 7,05 |
| 75 | 15,1 | 7,85 |
| 100 | 34,0 | 7,45 |
| (témoin) 0 | 0 (hauteur 132,5cm) | 6,8 |

REVENDICATIONS

1) Procédé de régulation de la croissance des plantes de colza caractérisé en ce qu'on leur applique une quantité efficace de produit de formule

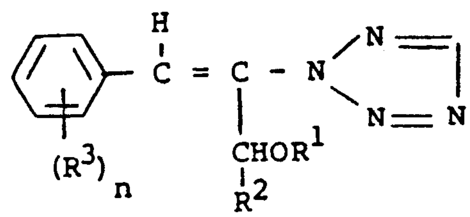 (I)

dans laquelle:

$R^1$ est un atome d'hydrogène ou un radical alkyle, alkényle ou alkynyle inférieur (c'est à dire ayant au plus 4 atomes de carbone),

$R^2$ est un radical alkyle de 1 à 6 atomes de carbone, un radical cyclopropyle ou méthyl-1 cyclopropyle,

$R^3$ est un atome d'halogène ou un groupe alkyle inférieur, alkoxy inférieur, phénoxy, phényle, cyano ou nitro,

n est un nombre entier de 0 à 3.

2) Procédé selon la revendication 1 caractérisé en ce que le produit utilisé est tel que, dans la formule (I), $R^1$ est l'atome d'hydrogène, $R^2$ est un radical tertiobutyle, $R^3$ est un atome de chlore, n est égal à 1 ou 2.

3) Procédé selon la revendication 2 caractérisé en ce que n est égal à 1 et le radical $R^3$ est en position para.

4) Procédé selon l'une des revendications 1 à 3 caractérisé en ce que le produit de formule (I) est sous forme d'isomère géométrique D actif en régulation de croissance.

5) Procédé selon l'une des revendications 1 à 4 caractérisé en ce qu'il augmente le nombre de ramifications des plantes.

6) Procédé selon l'une des revendications 1 à 5 caractérisé en ce qu'on applique 10 à 120 g/ha de produit de formule (I).

7) Procédé selon la revendication 6 caractérisé en ce qu'on applique 25 à 70 g/ha de produit de formule (I).

8) Procédé selon l'une des revendications 1 à 7 caractérisé en ce qu'on applique le produit de formule (I) à du colza dont le stade de développement va du stade "reprise de végétation après l'hiver" jusqu'au stade "dégagement de l'inflorescence principale".

# Stades repères du colza

Figure 1

Groupe de travail CETIOM, I.N.R.A., P.V.

Les stades représentés correspondent à des repères végétatifs permettant de normaliser les observations phénologiques.
Un stade est atteint dans une culture lorsque 60 % des plantes sont à ce stade.
La définition et la représentation de ces stades ont été élaborées à la suite des nombreuses observations faites par les techniciens de la culture du colza.

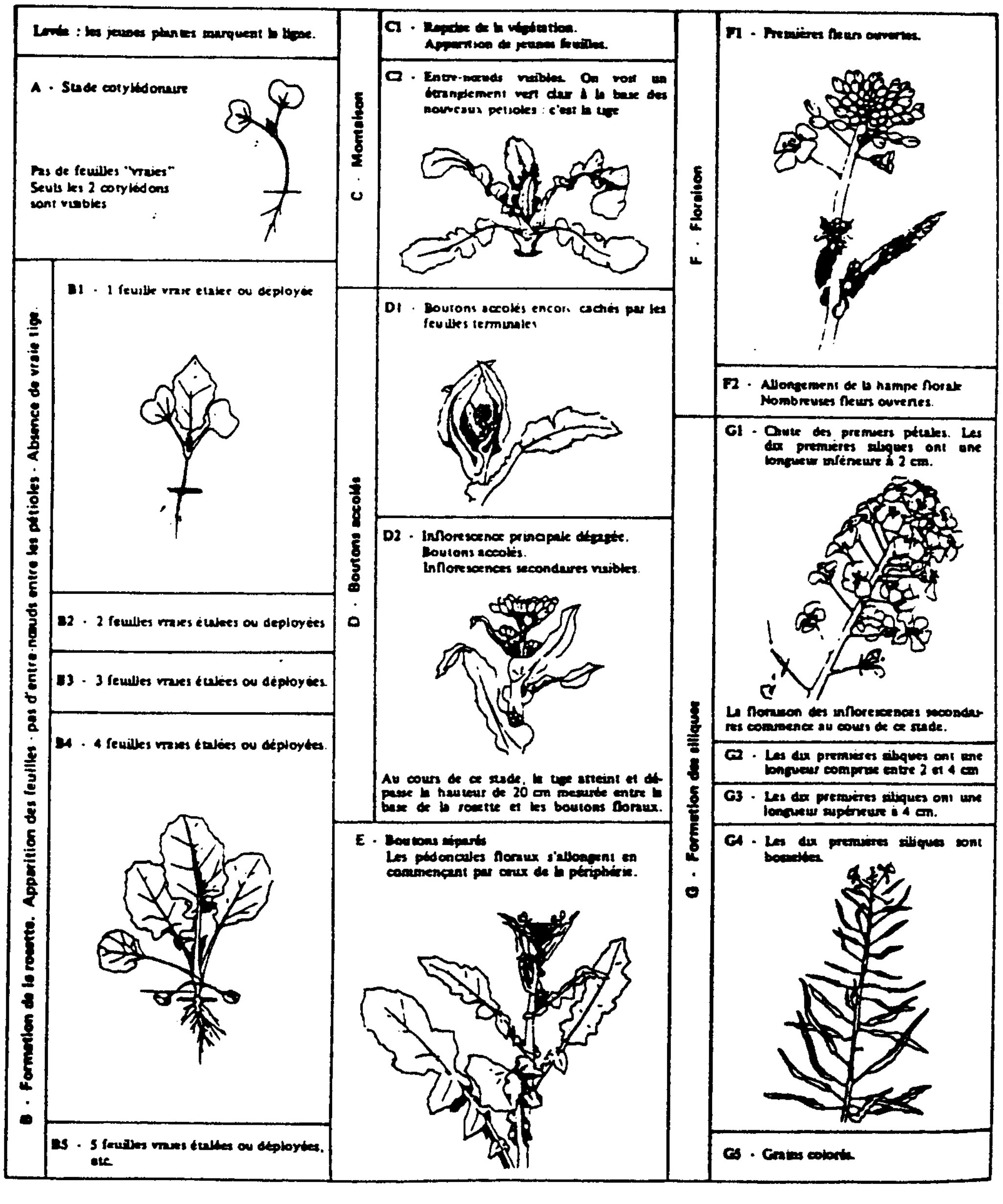

Office européen des brevets

**0211780**

Numero de la demande

## RAPPORT DE RECHERCHE EUROPEENNE

EP 86 42 0192

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| X | GB-A-2 046 260 (SUMITOMO) * Page 3, lignes 51-61; exemples 7,9-11 * & BE-A-882 335 (Cat. D) --- | 1-8 | A 01 N 43/653 |
| X | DE-A-3 045 182 (BAYER) * Revendications 3,4; page 9, lignes 1-3,12,13; page 11, lignes 1-6 * ----- | 1-8 | |
| | | | DOMAINES TECHNIQUES RECHERCHES (Int Cl.4) |
| | | | A 01 N |

Le present rapport de recherche a été établi pour toutes les revendications

| Lieu de la recherche | Date d'achèvement de la recherche | Examinateur |
|---|---|---|
| LA HAYE | 21-10-1986 | DECORTE D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82